# EUROPEAN PATENT APPLICATION

(11) **EP 2 876 843 A1**
(43) Date of publication of application: **27.05.2015**
(21) Application number: 13834201.9
(22) Date of filing: 26.08.2013
(51) Int. Cl.: H04L 12/26

(54) **METHOD, DEVICE AND SYSTEM FOR DETECTING IN-SEAT STATE OF TELEPHONE USER**

(30) Priority: 25.08.2012 CN 201210305743
(71) Applicant: Huawei Technologies Co., Ltd., Longgang District Shenzhen, Guangdong 518129 (CN)
(72) Inventor: DENG, Zhiji, Shenzhen Guangdong 518129 (CN); GAO, Jianxuan, Shenzhen Guangdong 518129 (CN)
(74) Representative: Körber, Martin Hans
(86) International application number: PCT/CN2013/082287
(87) International publication number: WO 2014/032556

(57) **Abstract**

The present invention provides a method for detecting an in-position state of a telephone set user, where an infrared sensor is disposed on a telephone set to which the method is applied and the infrared sensor is opposite to a user seat of the telephone set, and the method includes: converting, by the infrared sensor, an infrared light signal within a detection range of the infrared sensor into an electrical signal and transmitting the electrical signal to a comparator; comparing, by the comparator, the voltage of the electrical signal with a minimum sensible voltage when there is a person on the user seat of the telephone set and the body of the person is stationary; and if it is detected within a preset length of time that the voltage of the electrical signal is greater than the minimum sensible voltage, determining that the telephone set user is in position; and if it is not detected within the preset length of time that the voltage of the electrical signal is greater than the minimum sensible voltage, determining that the telephone set user is not in position. By using the method, the telephone set can accurately determine the in-position state of the telephone set user in a timely manner, thereby enriching functions of the telephone set.

## Description

### CROSS-REFERENCE TO RELATED APPLICATION

This application claims priority to Chinese Patent Application No. 201210305743.0, filed with the Chinese Patent Office on August 25, 2012 and entitled "METHOD, APPARATUS AND SYSTEM FOR DETECTING IN-POSITION STATE OF TELEPHONE SET USER", which is incorporated herein by reference in its entirety.

### TECHNICAL FIELD

The present invention relates to the field of communications technologies, and in particular, to a method, an apparatus and a system for detecting an in-position state of a telephone set user.

### BACKGROUND

In a process of telephone communication, when a calling party calls a called party, the called party may fail to answer the call because the called party is not in position, and it is also possible that the called party is in position but is busy with other urgent affairs, and therefore, temporarily, it is not convenient for the called party to answer the call. Obviously, an existing handling manner undoubtedly leads the calling party to indiscriminately determine that the called party is not in position. In this case, the calling party usually gives up calling again within a short time period but attempts to call again after waiting for a certain time. However, if, in this case, the called party is actually in position but just focuses on another affair, so as not to answer the call in time, which leads to missing of the call, then undoubtedly the timeliness of affair handing is affected and the efficiency of communication between people is reduced.

In addition, by using existing linkage computer chat software, for example, QQ, whether a telephone set user is in position may be detected by determining whether the user operates a computer. When the user does not operate the computer for a certain time, a user display state enters a "leave" state. However, this detection manner relies on another device than a telephone set, and this detection manner has limited accuracy. Often, the user is just busy with a current affair and therefore does not operate the computer temporarily, but the user is actually in position. Therefore, this computer operation detection manner cannot obtain accurate information.

### SUMMARY

Embodiments of the present invention provide a method, an apparatus and a system for detecting an in-position state of a telephone set user, which is capable of detecting an in-position state of a user more accurately.

An embodiment of the present invention provides a method for detecting an in-position state of a telephone set user, wherein an infrared sensor is disposed on a telephone set to which the method is applied and the infrared sensor is opposite to a user seat of the telephone set, and the method comprises: converting, by the infrared sensor, an infrared light signal within a detection range of the infrared sensor into an electrical signal and transmitting the electrical signal to a comparator; and comparing, by the comparator, the voltage of the electrical signal with a minimum sensible voltage when there is a person on the user seat of the telephone set and the body of the person is stationary; and if it is detected within a preset length of time that the voltage of the electrical signal is greater than the minimum sensible voltage, determining that the telephone set user is in position; and if it is not detected within the preset length of time that the voltage of the electrical signal is greater than the minimum sensible voltage, determining that the telephone set user is not in position.

An embodiment of the present invention provides an apparatus for detecting an in-position state of a telephone set user, comprising:
an infrared sensor, configured to sense whether a person moves within a detection range of the infrared sensor; and output a pulse electrical signal if a person moves; and output an unchanged level if no person moves;
a comparator, configured to receive the pulse electrical signal or unchanged level output by the infrared sensor, and then compare the received signal with a minimum sensible voltage when the body of a person is stationary; and
a determination module, configured to determine whether it is detected within a preset length of time that a voltage of the electrical signal is greater than the minimum sensible voltage; and if yes, determine that the user is in position; otherwise, determine that the user is not in position.

An embodiment of the present invention provides a telephone communication system, including: a telephone 12, a telephone set 14, a telephone exchange and a server, where the telephone set 12 and the telephone set 14 are connected to the telephone exchange by using a wired or wireless network, the telephone set 14 further includes an infrared sensor, configured to sense an in-position state of a user within a detection range of the infrared sensor, the telephone set 14 transmits in-position state information of the user to the server, and the server publishes, over a network, the in-position state information of the user of the telephone set 14 to the telephone set 12 that subscribes to the in-position state information of the user.

It can be seen from the technical solutions provided by the embodiments of the present invention that, an error probability of in-position detection of a telephone set user can be reduced by using an infrared sensor to sense whether the user is in position, thereby greatly enriching functions of a telephone set and obviously improving user experience.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic architectural diagram of a telephone communication system according to an embodiment of the present invention;
FIG. 2 is a schematic structural diagram of a telephone set according to an embodiment of the present invention;
FIG. 3 is a schematic diagram of a detection range of an infrared sensor of a telephone set according to an embodiment of the present invention;
FIG. 4 is a schematic diagram of a comparator of a telephone set according to an embodiment of the present invention;
FIG. 5 is a schematic diagram of a determination module of a telephone set according to an embodiment of the present invention; and
FIG. 6 is a flowchart of a determination method of a determination module of a telephone set according to an embodiment of the present invention.

### DESCRIPTION OF EMBODIMENTS

The following clearly and completely describes the technical solutions in the embodiments of the present invention with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

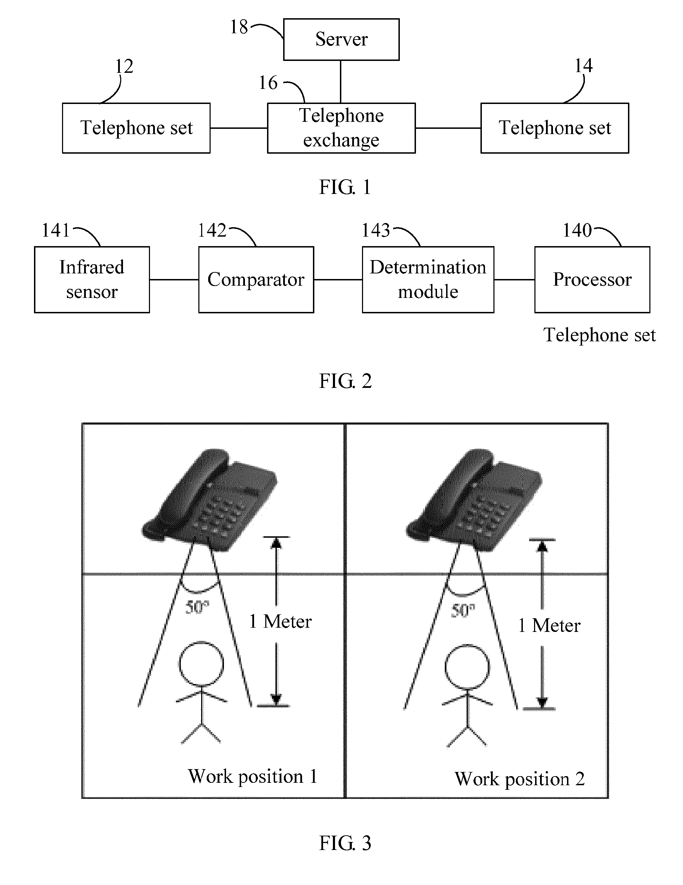

An architecture of a telephone communication system according to an embodiment of the present invention is shown in FIG. 1, where the telephone communication system includes a telephone set 12, a telephone set 14, a telephone exchange 16 and a server 18. The telephone set 12 and the telephone set 14 are usually IP telephone sets and are connected to the telephone exchange 16 by using a wired or wireless network. The telephone set 14 is capable of detecting an in-position state of a user B of the telephone set 14 and further transmits in-position state information of the user B to the server 18. The server 18 publishes, in a timely manner and by using a network, the in-position state information of the user B of the telephone set 14 to the telephone set 12 that subscribes to the in-position state information of the user B, and a user A of the telephone set 12 can see the in-position state of the user B of the telephone set 14 on a display screen of the telephone set 12.

A structure of the telephone set 14 according to an embodiment of the present invention is shown in FIG. 2, where the telephone set 14 includes: a processor 140, an infrared sensor 141, a comparator 142 and a determination module 143.

The processor 140 is a main control device and a core component of the telephone set 14, and is configured to control operation of the telephone set 14 and is also capable of transmitting in-position state information of a user to the server 18.

The infrared sensor 141 is opposite to a user seat of the telephone set and is usually a pyroelectric infrared sensor, and is configured to convert an infrared light signal within a detection range of the infrared sensor 141 into an electrical signal and send the electrical signal to the comparator 142 connected to the infrared sensor 141. When the body of the user moves within the detection range of the infrared sensor 141, the infrared sensor 141 outputs a pulse electrical signal. When no person moves, an unchanged level is output. The detection range of the infrared sensor 141 is shown in FIG. 3, and is a sector space with an angle of 30-120°, and preferably 50°, and a distance of 1 meter, which is exactly in front of the telephone set. The detection range may be set by hardware of the infrared sensor 141.

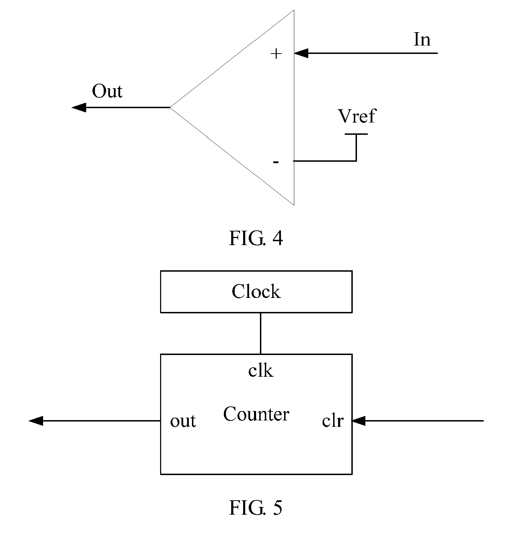

The comparator 142 is mainly configured to compare the electrical signal transmitted by the infrared sensor 141 with a reference voltage, where the reference voltage is a minimum sensible voltage when the body of a person is stationary, and only a signal greater than the reference voltage is transmitted to the determination module 143. In a normal case, when the user is in a working state, the body of the user cannot be absolutely stationary for a long time, and a slight body movement occurs more or less. The minimum sensible voltage represents a minimum sensible voltage when there is a person on the user seat of the telephone set and the body of the person is stationary. As shown in FIG. 4, Vref is the minimum sensible voltage when the body of a person is stationary and is connected to a negative terminal of the comparator 142. A positive terminal of the comparator 142 is connected to the infrared sensor 141 and is configured to receive a voltage of the body of the person sensed by the infrared sensor 141. Out is an output end and is connected to the determination module 143 connected to the comparator 142. A comparison principle of the comparator 142 is that, when a signal at the positive terminal of the comparator 142 is greater than that at the negative terminal, Out outputs 1 and otherwise, 0. Because an infrared signal is actually a pulse signal, an amplitude value of the infrared signal is in direct proportion to a movement amplitude of the body of the person. Therefore, when the movement amplitude of the body of the person is greater than a minimum movement, the output terminal Out outputs a corresponding pulse transition; otherwise, the output terminal Out outputs an unchanged signal 0.

The determination module 143 is shown in FIG. 5, and is configured to receive a signal output by the comparator 142 and determine, according to a logic operation, whether the signal indicates that the person is in position. The determination module 143 is usually a counter, where clk is a clock input and provides a counting clock for the counter. The counter performs counting by adding 1 without returning to zero according to a frequency of an input signal clock of clk. When the counter counts a maximum value (assuming that it is a counted value corresponding to 30 seconds), if no clr transition signal is input, the counter maintains the maximum value. clr is a signal input of the comparator 142, and a signal transition on this pin leads the counter to return to zero. Out is an output of the counter, and when the counter counts the maximum value, the output of Out is changed to 1, which indicates that no clr signal is input, that is, no person is in position; and when a counted value of the counter does not reach the maximum value, the output of Out is 0, which indicates that the counter returns to zero before reaching the maximum value, that is, the person is in position. The counter may be implemented by directly using an existing hardware counter, or implemented by using software according to the function description, which is not described in detail herein.

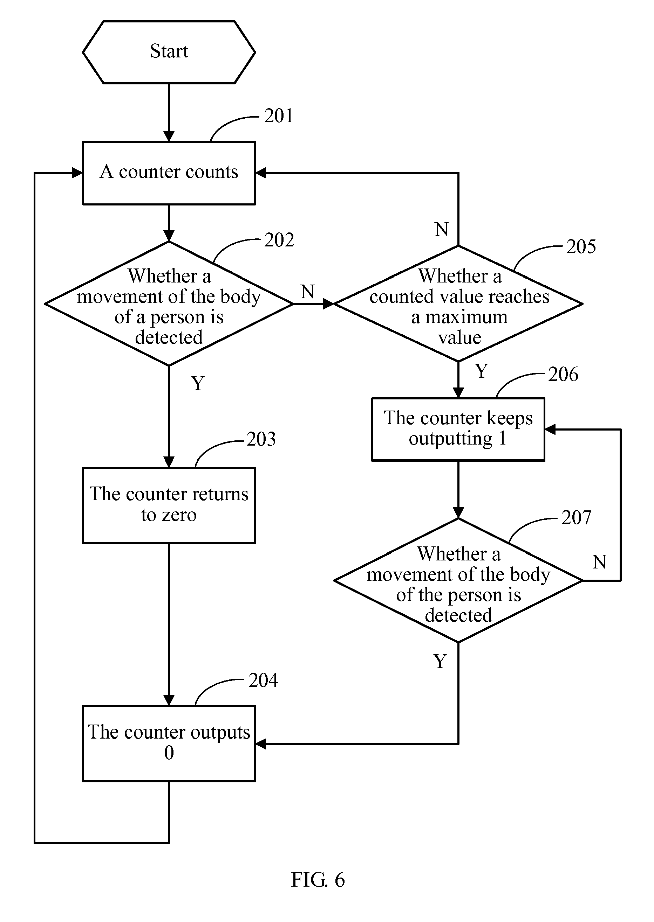

Refer to FIG. 6 for a specific determination method of the determination module 143:
Step 201: The counter counts.
Step 202: Determine whether a movement of the body of a person is detected; and if yes, perform
step 203; otherwise, perform step 205.
Step 203: The counter returns to zero.
Step 204: The counter outputs 0, which indicates that the person is in position, and returns to step 201.
Step 205: Determine whether a counted value of the counter reaches a maximum value; and if yes, perform step 206; otherwise, return to step 201.
Step 206: The counter keeps outputting 1, which indicates that no person is in position.
Step 207: Determine whether a movement of the body of the person is detected; and if yes, perform step 204; otherwise, perform step 206.

A total procedure of a method for detecting an in-position state of a user of a telephone set by the telephone set according to an embodiment of the present invention is as follows:
Step 1: The infrared sensor 141 of the telephone set 14 opposite to a user seat of the telephone set, and is configured to senses whether a person moves within a detection range of the infrared sensor 141; outputs a pulse electrical signal if a person moves; and outputs an unchanged level if no person moves.
Step 2: The comparator 142 of the telephone set 14 receives the pulse electrical signal or unchanged level output by the infrared sensor 141, and then compares the received signal with a minimum sensible voltage when there is a person on the user seat of the telephone set and the body of the person is stationary. If it is detected within a preset length of time, which may usually be a range of 10-200 seconds and preferably 20-40 seconds, that the voltage of the electrical signal is greater than the minimum sensible voltage, it is determined that the telephone set user is in position; and if it is not detected within the preset length of time that the voltage of the electrical signal is greater than the minimum sensible voltage, it is determined that the telephone set user is not in position.
Step 3: The telephone set 14 notifies the server 18 of state information whether the user B of the telephone set 14 is in position.
Step 4: The server 18 publishes the state information whether the user B of the telephone set 14 is in position to the telephone set '12 associated with the telephone set 14, so that the user A can query at any time for an in-position state of the user B by using the telephone set 12, so as to determine, in a better way, whether to initiate a call to the user B.

By using the method, a user can subscribe to in-position state information of another user associated with the user, and determine an in-position state of a user of a peer telephone set by using a detection function of the peer telephone set, thereby enriching functions of a telephone set.

The foregoing descriptions are merely exemplary specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for detecting an in-position state of a telephone set user, wherein an infrared sensor is disposed on a telephone set to which the method is applied and the infrared sensor is opposite to a user seat of the telephone set, and the method comprises:
converting, by the infrared sensor, an infrared light signal within a detection range of the infrared sensor into an electrical signal and transmitting the electrical signal to a comparator; and
comparing, by the comparator, the voltage of the electrical signal with a minimum sensible voltage when there is a person on the user seat of the telephone set and the body of the person is stationary; and if it is detected within a preset length of time that the voltage of the electrical signal is greater than the minimum sensible voltage, determining that the telephone set user is in position; and if it is not detected within the preset length of time that the voltage of the electrical signal is greater than the minimum sensible voltage, determining that the telephone set user is not in position.

2. The method according to claim 1, wherein the detection range specifically refers to: a sector space with an angle of 30-120° and a distance of 1 meter, which is exactly in front of the telephone set.

3. The method according to claim 1, wherein the preset length of time specifically refers to: a range of 10-200 seconds, and preferably 20-40 seconds.

4. The method according to claim 1, wherein the method further comprises: transmitting, by the telephone set, detected in-position state information of the telephone set user to a server, and publishing, by the server, the in-position state information of the user to another user that subscribes to the in-position state information of the user.

5. An apparatus for detecting an in-position state of a telephone set user, comprising:
an infrared sensor (141), configured to sense whether a person moves within a detection range of the infrared sensor (141); and output a pulse electrical signal if a person moves; and output an unchanged level if no person moves;
a comparator (142), configured to receive the pulse electrical signal or unchanged level output by the infrared sensor (141), and then compare the received signal with a minimum sensible voltage when the body of a person is stationary; and
a determination module (143), configured to determine whether it is detected within a preset length of time that a voltage of the electrical signal is greater than the minimum sensible voltage; and if yes, determine that the user is in position; otherwise, determine that the user is not in position.

6. The apparatus according to claim 5, wherein the apparatus is specifically an IP telephone set.

7. The apparatus according to claim 6, wherein the apparatus further comprises: a processor (140), configured to control operation of the IP telephone set and further transmit in-position state information of a user of the IP telephone set to a server (18).

8. The apparatus according to claim 5, wherein the preset length of time specifically refers to: a range of 10-200 seconds, and preferably 20-40 seconds.

9. A telephone communication system, comprising: a telephone set (12), a telephone set (14), a telephone exchange (16) and a server (18), wherein the telephone set (12) and the telephone set (14) are connected to the telephone exchange (16) by using a wired or wireless network, the telephone set (14) further comprises an infrared sensor (141), configured to sense an in-position state of a user within a detection range of the infrared sensor (141), the telephone set (14) transmits in-position state information of the user to the server (18), and the server (18) publishes, over a network, the in-position state information of the user of the telephone set (14) to the telephone set (12) that subscribes to the in-position state information of the user.

10. The system according to claim 9, wherein the telephone set (14) further comprises:
a comparator (142), configured to receive a pulse electrical signal or an unchanged level output by the infrared sensor (141), and then compare the received signal with a minimum sensible voltage when there is a person on the user seat of the telephone set and the body of the person is stationary; and
a determination module (143), configured to determine whether it is detected within a preset length of time that the voltage of the electrical signal is greater than the minimum sensible voltage; and if yes, determine that a telephone set user is in position; otherwise, determine that the telephone set user is not in position.
